# EUROPÄISCHE PATENTSCHRIFT

(11) **EP 0 771 125 B1**
(45) Veröffentlichungstag und Bekanntmachung des Hinweises auf die Patenterteilung: **21.12.2005**
(21) Anmeldenummer: 96115853.2
(22) Anmeldetag: 02.10.1996
(51) Int. Cl.: H04Q 7/22, H04B 7/26

(54) **Verfahren und Anordnung zur Übertragung von Daten zwischen einem zellular aufgebauten Mobilfunknetz und einer Funkteilnehmerstation**
Method and arrangement for data transmission between a mobile cellular network and user equipment
Méthode et dispositif pour la transmission de données entre un réseau mobile cellulaire et une station d'abonné

(30) Priorität: 23.10.1995 DE 19539374
(43) Veröffentlichungstag der Anmeldung: 02.05.1997
(73) Patentinhaber: SIEMENS AKTIENGESELLSCHAFT, 80333 München (DE)
(72) Erfinder: Mademann, Frank, Dr., 15344 Strausberg (DE)

(56) Entgegenhaltungen:
- WO-A-95/16330

## Beschreibung

Die Erfindung betrifft ein Verfahren und eine Anordnung zur Übertragung von Daten zwischen einem aus mehreren Funkzellen zellular aufgebauten Mobilfunknetz und einer Funkteilnehmerstation unter Verwendung eines ZeitmultiplexÜbertragungsverfahrens.

WO-A 95/16330 offenbart die Zuweisung eines Datenkanals für die Übertragung von Daten von oder zu einer Mobilstation. Dabei können Daten ohne "Paging" (d.h. ohne vorheriges Aussenden einer Funkrufnachricht) an die Mobilstation übertragen werden.

In zellularen Mobilfunknetzen, wie beispielsweise dem digitalen Mobilfunknetz nach dem GSM-Standard (Global System for Mobile Communication), werden Sprach- und Datensignale über eine einheitliche Funkschnittstelle empfangen und gesendet. In dem Aufsatz "GSM-Funkschnittstelle", von P. Smolka, telekom praxis, 4/93, Seiten 17 bis 24 sind die Elemente und Funktionen der Funkübertragung zwischen Funkteilnehmerstationen und dem GSM-Mobilfunknetz beschrieben. Bei einer Anforderung zur Übertragung von Daten in der Abwärtsübertragungsrichtung vom Mobilfunknetz zur Funkteilnehmerstation wird zunächst eine Funkrufnachricht in die Funkzellen des Aufenthaltsgebiets gesendet, in dem die Funkteilnehmerstation sich derzeit befindet (Paging). Der Ruf der Funkteilnehmerstation erfolgt dabei über einen eigenen Funkrufkanal (Paging Channel) und wird von der Funkteilnehmerstation über einen Zufallszugriffskanal (Random Access Channel) beantwortet. Nach der Beantwortung des Funkrufs erhält die Funkteilnehmerstation einen Übertragungskanal zur Sprach- oder Datenübertragung zugewiesen.

Das Aussenden der Funkrufnachricht in die Funkzellen bringt eine hohe Last sowohl für die Signalisierungskomponenten des Netzes als auch für die Signalisierungskanäle in den Funkzellen mit sich. Die Signalisierungslast wächst insbesondere dann an, wenn eine Vielzahl von kurzen Datenpaketen gemäß einem gesonderten Paketdatendienst (General Packet Radio Service) im GSM-Mobilfunknetz burstartig zu übertragen sind. Auch steigt die Signalisierungslast proportional mit größer werdender Anzahl von Funkzellen in einem Aufenthaltsgebiet.

Daher ist es Aufgabe der vorliegenden Erfindung, ein Verfahren und eine Anordnung zur Übertragung von Daten zwischen einem zellular aufgebauten Mobilfunknetz und einer Funkteilnehmerstation anzugeben, durch das die Signalisierungslast bei der Übertragung von Datenpaketen in der Abwärtsübertragungsrichtung reduziert und die Aufbauzeit für den Verbindungsaufbau verkürzt werden kann.

Diese Aufgabe wird gemäß der Erfindung durch die Merkmale des Patentanspruchs 1 hinsichtlich des Verfahrens und durch die Merkmale des Patentanspruchs 6 hinsichtlich der Anordnung gelöst. Weiterbildungen der Erfindung sind in den Unteransprüchen angegeben.

Dennach wird der Funkteilnehmerstation von dem Mobilfunknetz bei einer Anforderung zur Übertragung eines oder mehrerer Datenpakete in der Abwärtsübertragungsrichtung über einen Signalisierungskanal ein Übertragungskanal der aktuellen Funkzelle, in der sich die Funkteilnehmerstation befindet,direkt zugewiesene, wobei über den direkt zugewiesenen Übertragungskanal ein Zufallszugriff in der Aufwärtsübertragungsrichtung während des Empfangs der in der Abwärtsübertragungsrichtung gesendeten Datenpakete von der Funkteilnehmerstation gesendet und mit der Übertragung von Meßwerten über die Funkschnittstelle in der Abwärtsübertragungsrichtung von dem Mobilfunknetz beantwortet wird. Die direkte Zuteilung des Übertragungskanals der aktuellen Funkzelle an die Funkteilnehmerstation ermöglicht die Übertragung von Datenpaketen ohne vorheriges Aussenden der Funkrufnachricht (Paging) und bewirkt demgegenüber eine Verkürzung der Anfangsverzögerung bei der Datenpaketübertragung in Richtung Funkteilnehmerstation. Außerdem läßt sich durch Wegfall der Funkrufnachricht die Signalisierungslast bei Datenpaketübertragungen zur Funkteilnehmerstation reduzieren, was insbesondere bei der Vielzahl von kurzzeitigen Datenpaketübertagungen von Vorteil ist.

Von Vorteil ist es, daß im Mobilfunknetz eine Information über die aktuelle Funkzelle, in der sich die Funkteilnehmerstation befindet, aus einem zuvor von der Funkteilnehmerstation in der Aufwärtsübertragungsrichtung gesendeten Datenpaket oder aus einer Signalisierungsinformation abgeleitet wird.

Es ist von Vorteil, daß die Übertragung der Datenpakete auf dem direkt zugewiesenen Übertragungskanal während oder nach Synchronisation der Funkteilnehmerstation auf den zugewiesenen Übertragungskanal begonnen wird.

Es ist weiterhin von Vorteil, daß von einem gesonderten Dienstenetzknoten im Mobilfunknetz die direkte Zuteilung des Übertragungskanals für die Übertragung von Datenpaketen gemäß einem Paketdatendienst veranlaßt und der Funkteilnehmerstation in einer Signalisierungsnachricht über den Signalisierungskanal mitgeteilt wird.

Die Erfindung wird anhand eines in Figuren dargestellten Ausführungsbeispiels näher erläutert. Im einzelnen zeigen
- Figur 1: den Nachrichtenfluß bei der Signalisierung der direkten Zuweisung eines Übertragungskanals zur Datenpaketübertragung in der Abwärtsübertragungsrichtung und
- Figur 2: die Rahmenstruktur eines Übertragungsrahmens zur Übertragung von Signalisierungsinformationen im Signalisierungskanal und von Nutz-und Steuerinformationen im direkt zugewiesenen Übertragungskanal.

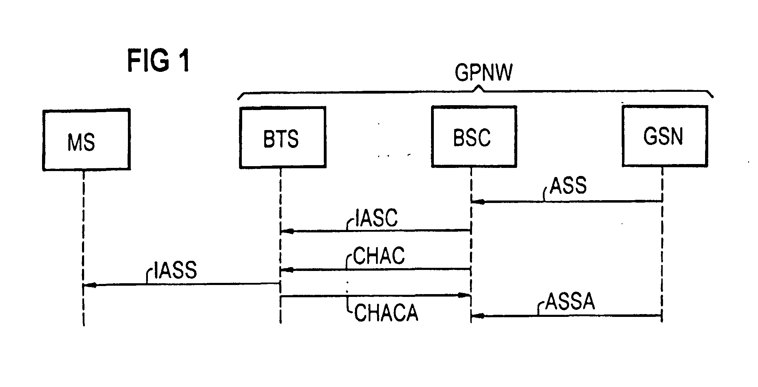

Figur 1 zeigt in einem Nachrichtenflußplan die Signalisierung für die direkte Zuweisung eines Übertragungskanals, über den ein oder mehrere Datenpakete gemäß einem Paketdatendienst (General Packed Radio Service) zwischen einem Mobilfunknetz GPNW und einer Funkteilnehmerstation MS in der Abwärtsübertragungsrichtung (downlink) gesendet werden. Das Mobilfunknetz GPNW, das sich gemäß dem GSM-Standard zur Sprach- und Datenübertragung eignet, ist ein aus einer Vielzahl von Funkzellen aufgebautes digitales Netz. Die Erfindung kann aber auch in einem analogen Netz angewendet werden. Über eine einheitliche Luftschnittstelle werden die Sprach- und Datensignale zwischen der Funkteilnehmerstation MS und einem Funkübertragungssystem, bestehend aus jeweils in den Funkzellen angeordneten Basis-Sende/Empfangsstationen BTS und Basisstationssteuerungen BSC, ausgetauscht. Mit dem Funkübertragungssystem ist ein Vermittlungssystem mit üblicherweise mehreren Mobilvermittlungsstellen verbunden, die, jeweils zuständig für ein lokales Aufenthaltsgebiet, den Verbindungsaufbau bei abgehenden und ankommenden Anrufen und bei Datenübertragungen steuern und durchführen. Mit den Mobilvermittlungsstellen sind Besucherregister gekoppelt, die als dezentrale Teilnehmerdatenbasen die Teilnehmerdaten der in ihren Aufenthaltsgebieten sich aufhaltenden Funkteilnehmer vorübergehend speichern. Die Teilnehmerdaten aller im Mobilfunknetz registrierten Funkteilnehmer werden in mindestens einer zentralen Teilehmerdatenbasis - dem Heimatregister - gespeichert. Die Mobilvermittlungsstellen, die Besucherregister und die Heimatregister bilden das Vermittlungssystem im digitalen zellularen Mobilfunknetz nach dem GSM-Standard.

Das Mobilfunknetz GPNW verfügt über einen gesonderten Dienstenetzknoten GSN zur Bearbeitung des Paketdatendienstes, bei dem ein oder mehrere Datenpakete jeweils stoßweise in Datenbursts übertragen werden. Der gesonderte Dienstenetzknoten GSN ist vorzugsweise Bestandteil der jeweiligen Mobilvermittlungsstelle des Vermittlungssystems. Weitere Alternativen ergeben sich aus der Anordnung des Dienstenetzknotens GSN entweder im Funkübertragungssystem oder zusätzlich zu den Mobilvermittlungsstellen im Vermittlungssytem. Im Falle einer Anforderung im Mobilfunknetz zur Übertragung der Datenpakete wird das zuständige Besucherregister im Aufenthaltsgebiet der Funkteilnehmerstation MS abgefragt und dabei eine die aktuelle Funkzelle identifizierende Zellenkennung bereitgestellt. Die Zellenkennung wird jeweils bei der Übertragung von Datenpaketen von der Funkteilnehmerstation in Richtung Mobilfunknetz mitgesendet und in dem jeweiligen Besucherregister, das aus Teilnehmerdatenbasis aufgefaßt werden kann, gespeichert. Es ist auch möglich, daß von der aktuellen Funkzelle, in der die Funkteilnehmerstation MS sich befindet, eine Signalisierungsinformation zur Kennzeichnung der Funkzelle zuvor in der Aufwärtsübertragungsrichtung zum Netz wird. Auf diese Weise wird das Netz über die aktuelle Funkzelle informiert, ohne daß es einer Datenpaketübertragung bedarf.

Bei Kenntnis der aktuellen Funkzelle wird von dem Dienstenetzknoten GSN eine Nachricht ASS zur Basisstationssteuerung BSC ausgesendet, in der die Zuweisung eines Übertragungskanals für die Übertragung der Datenpakete über die Luftschnittstelle zur Funkteilnehmerstation MS gefordert wird. Auf Grund der in der Nachricht ASS empfangenen Anforderung wird von der Basisstationssteuerung BSC eine Nachricht IASC an die Basis-Sende/Empfangsstation BTS gesendet, durch die die direkte Zuweisung eines Übertragungskanals der bekannten aktuellen Funkzelle an die adressierte Funkteilnehmerstation MS ohne Aussenden einer Funkrufnachricht (Paging) auf dem üblicherweise vorgesehenen Funkrufkanal (Paging Channel) veranlaßt wird.Daraufhin wird zwischen der Basis-Sende/Empfangsstation BTS und der Funkteilnehmerstation MS eine Nachricht IASS über einen Signalisierungskanal der Luftschnittstelle übertragen. In der Nachricht IASS wird ein Übertragungskanal der aktuellen Funkzelle direkt zugewiesen, ohne daß zuvor über den Funkrufkanal die adressierte Funkteilnehmerstation gerufen werden muß. Der zugewiesene Übertragungskanal ist ein Duplex-Übertragungskanal für beide Übertragungsrichtungen.

Durch Wegfall des Aussendens der Funkrufnachricht, die üblicherweise an mehrere Funkzelle in einem Aufenthaltsgebiet gerichtet wird, kommt es zu einer Reduzierung der Signalisierungslast auf der Funkschnittstelle bei der Übertragung von Datenpaketen in Richtung adressierter Funkteilnehmerstation. Ein weiterer Vorteil der direkten Zuweisung eines Übertragungskanals der aktuellen Funkzelle liegt in der Verkürzung der Anfangsverzögerung bei der Übertragung der Datenpakete gegenüber der Alternative mit vorherigem Aussenden der Funkrufnachricht (Paging) in der Abwärtsübertragungsrichtung.

Die Basis-Sende/Empfangsstation BTS empfängt von der Basisstationssteuerung BSC eine weitere Nachricht CHAC, mit der der zugewiesene Übertragungskanals zur Datenpaketübertragung über die Luftschnittstelle aktiviert wird. Als Antwort auf die empfangene Nachricht CHAC wird von der Basis-Sende/Empfangsstation BTS eine Nachricht CHACA zur Basisstationssteuerung BSC rückgesendet, in der die Aktivierung des direkt zugewiesenen Übertragungskanals der Basisstationssteuerung BSC bestätigt wird. Die Basisstationssteuerung BSC sendet daraufhin in der Nachricht ASSA eine Bestätigung der in der Nachricht ASS enthaltenen Anforderung zur Zuteilung eines Übertragungskanals auf der Luftschnittstelle zum Dienstenetzknoten GSN zurück. Zwischen der adressierten Funkteilnehmerstation MS und dem Mobilfunknetz GPNW ist somit ein Übertragungskanal der aktuellen Funkzelle direkt ohne Aussenden der Funkrufnachricht aufgebaut worden, auf dem die Datenpakete des gesonderten Paketdatendienstes in Richtung zur Funkteilnehmerstation früher und mit reduziertem Signalisierungsaufwand übertragen werden können. Nach einer kurzen Wartezeit, in der die Funkteilnehmerstation MS sich auf den direkt zugewiesenen Übertragungskanal abgestimmt hat, beginnt die Übertragung der Datenpakete vom Mobilfunknetz GPNW zur Funkteilnehmerstation MS über den direkt zugewiesenen Übertragungskanal. Zur gesicherten Datenpaketübertragung werden auch Nutz-und Steuerinformationen in der Aufwärtsübertragungsrichtung (uplink) von der Funkteilnehmerstation MS zum Mobilfunknetz GPNW gesendet. Zu diesem Zweck erfolgt von der Funkteilnehmerstation MS ein Zufallszugriff (Random Access) in dem zugewiesenen Übertragungskanal, bei dem ein Informationsburst nach einem Zufallszugriffsverfahren an die Basis-Sende/Empfangsstation BTS übertragen wird. Der Zufallszugriff wird in der Aufwärtsübertragungsrichtung bereits während der in der Abwärtsübertragungsrichtung begonnenen Übertragung der Datenpakete ausgeführt. Das Mobilfunknetz GPNW sendet als Antwort auf den im zugewiesenen Übertragungskanal übertragenen Informationsburst mehrere Meßwerte (z.B. Timing Advance) - die Funkparameter - über die Luftschnittstelle zurück, die es der Funkteilnehmerstation MS gestatten, weitere Informationen, wie z.B. temporäre Funkteilnehmeridentifikationsnummer, in der Aufwärtsübertragungsrichtung zum Mobilfunknetz GPNW auszusenden. Die Übertragung der Meßwerte in der Abwärtsübertragungsrichtung erfolgt dabei zwischen den in Blökken übertragenen Datenpaketen des Paketdatendienstes. Während die direkte Zuweisung eines Übertragungskanals der dem Mobilfunknetz bekannten aktuellen Funkzelle auf einem Signalisierungskanal der Luftschnittstelle erfolgt, werden die vom Mobilfunknetz bereitgestellten Meßwerte und die von der Funkteilnehmerstation kommenden Informationen, sowie der Zufallszugriff über den direkt zugewiesenen Übertragungskanal gesendet.

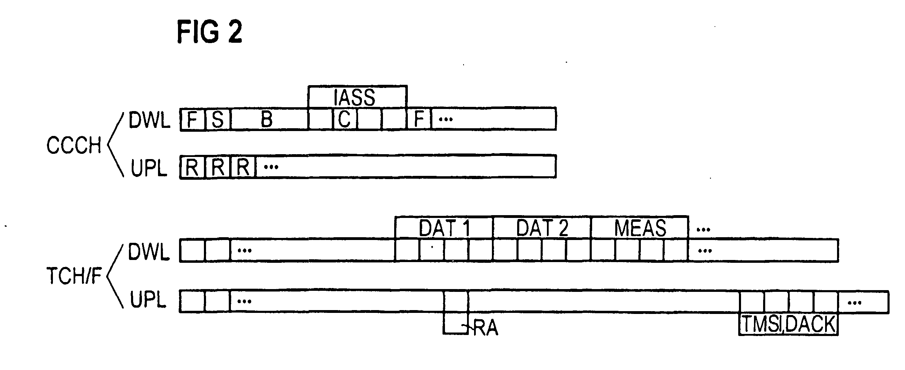

Figur 2 zeigt den Signalisierungskanal CCCH (Common Control Channel) und den zugeteilten Übertragungskanal TCH/F (Traffic Channel/Full Rate Codec) jeweils in der Abwärtsübertragungsrichtung DWL (Down Link) und der Aufwärtsübertragungsrichtung UPL (Up Link). Die auf der Luftschnittstelle zwischen der Funkteilnehmerstation und dem Mobilfunknetz ausgetauschten Informationen werden in Zeitschlitzen (Bursts) unterschiedlicher Bursttypen gemäß einem Zeitmultiplexverfahren übertragen, die in einem physikalischen Rahmen, dem TDMA-Rahmen (Time Division Multiple Access), zusammengefaßt sind. Die Rahmen können zu Multirahmen zusammengefaßt werden, wobei Nutz- und Steuerinformationen sowie Signalisierungsinformationen in getrennten Multirahmen enthalten sind, von denen mehrere wiederum zu einem übergeordneten Superrahmen zusammenfaßbar sind. Die Rahmenstruktur für den Signalisierungskanal CCCH in Figur 2 zeigt einen Multirahmen, in dem die Signalisierungsinformationen für die Abwärtsübertragungsrichtung DWL in mehreren Rahmen F, S, B und C und für die Aufwärtsübertragungsrichtung UPL in mehreren Rahmen R übertragen werden. Die Nachricht IASS, mit der von dem Mobilfunknetz die direkte Zuweisung des Übertragungskanals der aktuellen in der Abwärtsübertragungsrichtung zur Funkteilnehmerstation signalisiert wird, wird als Signalisierungsinformation beispielsweise in einem oder mehreren Rahmen C auf der Luftschnittstelle zwischen der Basis-Sende/Empfangsstation des Mobilfunknetzes und der Funkteilnehmerstation mitgesendet.

Die Rahmenstruktur des direkt zugewiesenen Duplex-Übertragungskanals TCH/F weist eine Vielzahl von Rahmen für die Übertragung von Verkehrsinformationen in der Abwärtsübertragungsrichtung DWL und in der Aufwärtsübertragungsrichtung UPL auf. Dabei werden in der Abwärtsübertragungsrichtung DWL ein oder mehrere Datenpakete DAT1, DAT2 blockweise aufeinanderfolgend zur Funkteilnehmerstation gesendet, währenddessen in der Aufwärtsübertragungsrichtung UPL der Zufallszugriff RA (Random Access) als Informationsburst gesendet wird. Bei Empfang des von der Funkteilnehmerstation ausgesendeten Informationsbursts RA sendet das Mobilfunknetz als Antwort die Meßwerte MEAS in der Abwärtsübertragungsrichtung DWL zurück, um auf der Funkschnittstelle Funkparameter für die Steuerung des Funkverbindungsaufbaus und damit eine gesicherte Datenpaketübertragung zu gewährleisten. Messungen auf der Funkschnittstelle werden für jede Verbindung zu einer Funkteilnehmerstation auf dem ihr zugeteilten Signalisierungskanal bzw. Übertragungskanal durchgeführt. Im vorliegenden Beispiel der Datenpaketübertragung werden die Meßwerte MEAS zwischen den einzelnen Datenpaketübertragungen in der Abwärtsübertragungsrichtung DWL gesendet. Auf Grund der empfangenen Meßwerte aus der aktuellen Funkzelle ist es möglich, weitere Informationen, wie beispielsweise die temporäre Funkteilnehmeridentifikation TMSI (Temporary Mobile Subscriber Identity) und die Nachricht DACK zur Bestätigung des Empfangs der jeweils gendeten Datenpakete, in der Aufwärtsübertragungsrichtung UPL über den zugewiesenen Übertragungskanals TCH/F zu ihrer Basis-Sende/Empfangsstation im Mobilfunknetz auszusenden.

## Patentansprüche

1. Verfahren zur Übertragung von Daten zwischen einem aus mehreren Funkzellen zellular aufgebauten Mobilfunknetz (GPNW) und einer Funkteilnehmerstation (MS) unter Verwendung eines Zeitmultiplexübertragungsverfahrens, wobei von dem Mobilfunknetz (GPNW) bei einer Anforderung zur Übertragung eines oder mehrerer Datenpakete (DAT1, DAT2) in der Abwärtsübertragungsrichtung zur Funkteilnehmerstation (MS) ein Übertragungskanal (TCH/F) der aktuellen Funkzelle, in der sich die Funkteilnehmerstation (MS) befindet, über einen Signalisierungskanal (CCCH) der Funkteilnehmerstation (MS) ohne vorheriges Aussenden einer Funkrufnachricht direkt zugewiesen wird, **dadurch gekennzeichnet, dass** über den direkt zugewiesenen Übertragungskanal (TCH/F) ein Zufallszugriff (RA) in der Aufwärtsübertragungsrichtung während des Empfangs der in der Abwärtsübertragungsrichtung gesendeten Datenpakete (DAT1, DAT2) von der Funkteilnehmerstation (MS) gesendet und mit der Übertragung von Messwerten (MEAS) über die Funkschnittstelle in der Abwärtsübertragungsrichtung von dem Mobilfunknetz (GPNW) beantwortet wird.

2. Verfahren nach Anspruch 1,
**dadurch gekennzeichnet,**
**dass** eine Information über die aktuelle Funkzelle, in der sich die Funkteilnehmerstation (MS) befindet, aus einem zuvor von der Funkteilnehmerstation (MS) in der Aufwärtsübertragungsrichtung gesendeten Datenpaket (DAT1, DAT2) oder aus einer Signalisierungsinformation abgeleitet wird.

3. Verfahren nach einem der vorgehenden Ansprüche,
**dadurch gekennzeichnet,**
**dass** vom Mobilfunknetz (GPNW) das Aussenden der Datenpakete (DAT1, DAT2) in der Abwärtsübertragungsrichtung während oder nach einer Synchronisation der Funkteilnehmerstation (MS) auf den direkt zugewiesenen Übertragungskanal (TCH/F) begonnen wird.

4. Verfahren nach einem der vorhergehenden Ansprüche,
**dadurch gekennzeichnet,**
**dass** vom Mobilfunknetz (BTS) die direkte Zuteilung des Übertragungskanals (TCH/F) für die Übertragung der Datenpakete (DAT1, DAT2) gemäß einem Paketdatendienst veranlasst und der Funkteilnehmerstation (MS) in einer Signalisierungsnachricht (IASS) über den Signalisierungskanal (CCCH) mitgeteilt wird.

5. Anordnung zur Übertragung von Daten zwischen einem aus mehreren Funkzellen zellular aufgebauten Mobilfunknetz (GPNW) und einer Funkteilnehmerstation (MS) unter Verwendung eines Zeitmultiplexübertragungsverfahrens,
wobei im Mobilfunknetz (GPNW) eine Steuereinrichtung (BSC) vorgesehen ist, die derart ausgebildet ist, dass bei einer Anforderung zur Übertragung eines oder mehrerer Datenpakete (DAT1, DAT2) in der Abwärtsübertragungsrichtung zur Funkteilnehmerstation (MS) ein Übertragungskanal (TCH/F) der aktuellen Funkzelle, in der sich die Funkteilnehmerstation (MS) befindet, über einen Signalisierungskanal (CCCH) der Funkteilnehmerstation (MS) ohne vorheriges Aussenden einer Funkrufnachricht direkt zugewiesen wird, **dadurch gekennzeichnet,**
**dass** über den direkt zugewiesenen Übertragungskanal (TCH/F) ein Zufallszugriff (RA) in der Aufwärtsübertragungsrichtung während des Empfangs der in der Abwärtsübertragungsrichtung gesendeten Datenpakete (DAT1, DAT2) von der Funkteilnehmerstation (MS) gesendet und mit der Übertragung von Messwerten (MEAS) über die Funkschnittstelle in der Abwärtsübertragungsrichtung von dem Mobilfunknetz (GPNW) beantwortet wird.

6. Anordnung nach Anspruch 5,
**dadurch gekennzeichnet,**
**dass** im Mobilfunknetz (GPNW) ein Dienstenetzknoten (GSN) vorgesehen ist, der derart ausgebildet ist, dass die Übertragung der Datenpakete (DAT1, DAT2) gemäß einem Paketdatendienst über den direkt zugewiesenen Übertragungskanal (TCH/F) veranlasst wird.

## Claims

1. Method for transmission of data between a cellularly structured mobile radio network (GPNW) consisting of several radio cells and a radio communications subscriber station (MS) using a time multiplex transmission procedure, whereby in the event of a request to transmit one or more data packets (DAT1, DAT2) in the downward transmission direction to the radio communications subscriber station (MS) the mobile radio network (GPNW), without first sending a paging message, directly assigns a transmission channel (TCH/F) of the current radio cell in which the radio communications subscriber station (MS) is located, via a signalling channel (CCCH) of the radio communications subscriber station (MS), **characterised in that** a random access (RA) is sent by the radio communications subscriber station (MS) via the directly assigned transmission channel (TCH/F) in the upward transmission direction during the receipt of the data packets (DAT1, DAT2) sent in the downward transmission direction and **in that** a response is given in the form of the transmission of measured values (MEAS) via the radio interface in the downward transmission direction by the mobile radio network (GPNW).

2. Method according to Claim 1, **characterised in that** information about the current radio cell in which the radio communications subscriber station (MS) is located is derived from a data packet (DAT1, DAT2) previously sent by the radio communications subscriber station (MS) in the upward transmission direction or from signalling information.

3. Method according to one of the previous claims, **characterised in that** the mobile radio network (GPNW) starts to send the data packets (DAT1, DAT2) in the downward transmission direction during or after a synchronisation of the radio communications subscriber station (MS) to the directly assigned transmission channel (TCH/F).

4. Method according to one of the preceding claims, **characterised in that** the mobile radio network (BTS) initiates the direct assignment of the transmission channel (TCH/F) for the transmission of the data packets (DAT1, DAT2) in accordance with a packet data service and the radio communications subscriber station (MS) is notified about the signalling channel (CCCH) in a signalling message (IASS).

5. Arrangement for transmission of data between a cellularly structured mobile radio network (GPNW) consisting of several radio cells and a radio communications subscriber station (MS) using a time multiplex transmission procedure, whereby a control device (BSC) is provided in the mobile radio network (GPNW) which is configured such that in the event of a request to transmit one or more data packets (DAT1, DAT2) in the downward transmission direction to the radio communications subscriber station (MS) a transmission channel (TCH/F) of the current radio cell in which the radio communications subscriber station (MS) is located is directly assigned via a signalling channel (CCCH) of the radio communications subscriber station (MS) without a paging message previously having been sent, **characterised in that** a random access (RA) is sent by the radio communications subscriber station (MS) via the directly assigned transmission channel (TCH/F) in the upward transmission direction during the receipt of the data packets (DAT1, DAT2) sent in the downward transmission direction and **in that** a response is given in the form of the transmission of measured values (MEAS) via the radio interface in the downward transmission direction by the mobile radio network (GPNW).

6. Arrangement according to Claim 5, **characterised in that** a service network node (GSN) is provided in the mobile radio network (GPNW), which is configured such that the transmission of the data packets (DAT1, DAT2) is initiated in accordance with a packet data service via the directly assigned transmission channel (TCH/F).

## Revendications

1. Procédé de transmission de données entre un réseau de radiocommunication mobile (GPNW), constitué de manière cellulaire par plusieurs cellules radio, et une station radio d'abonné (MS), avec utilisation d'un procédé de transmission par multiplexage temporel, le réseau de radiocommunication mobile (GPNW), en cas d'une demande pour la transmission d'un ou de plusieurs paquets de données (DAT1, DAT2) dans le sens de transmission descendant vers la station radio d'abonné attribuant directement à la station radio d'abonné, par l'intermédiaire d'un canal de signalisation (CCCH), un canal de transmission (TCH/F) de la cellule momentanée, dans laquelle se trouve la station radio d'abonné, sans émission préalable d'un message d'appel radio,
**caractérisé en ce que**,
par l'intermédiaire du canal de transmission (TCH/F) directement affecté, un accès aléatoire (RA) dans le sens de transmission montant est émis par la station radio d'abonné (MS) pendant la réception des paquets de données (DAT1, DAT2) émis dans le sens de transmission descendant et qu'il y est répondu par le réseau de radiocommunication mobile (GPNW) par la transmission de valeurs de mesure (MEAS) par l'intermédiaire de l'interface radio dans le sens de transmission descendant.

2. Procédé selon la revendication 1,
**caractérisé en ce**
**qu'**une information concernant la cellule radio momentanée, dans laquelle se trouve la station radio d'abonné (MS), est dérivée d'un paquet de données (DAT1, DAT2), émis au préalable par la station radio d'abonné (MS) dans le sens de transmission montant, ou d'une information de signalisation.

3. Procédé selon l'une quelconque des revendications précédentes,
**caractérisé en ce**
**que** l'émission des paquets de données (DAT1, DAT2) est commencée par le réseau de radiocommunication mobile (GPNW) dans le sens de transmission descendant pendant ou après une synchronisation de la station radio d'abonné (MS) sur le canal de transmission (TCH/F) affecté directement.

4. Procédé selon l'une quelconque des revendications précédentes,
**caractérisé en ce**
**que** l'affectation directe du canal de transmission (TCH/F) pour la transmission des paquets de données (DAT1, DAT2) selon un service de données en paquets est initiée par le réseau de radiocommunication mobile (BTS) et en ce qu'elle est communiquée à la station radio d'abonné (MS) dans un message de signalisation (IASS) par l'intermédiaire du canal de signalisation (CCCH).

5. Dispositif de transmission de données entre un réseau de radiocommunication mobile (GPNW), constitué de manière cellulaire par plusieurs cellules radio, et une station radio d'abonné (MS), avec utilisation d'un procédé de transmission par multiplexage temporel,
un dispositif de commande (BSC) étant prévu dans le réseau de radiocommunication mobile (GPNW), qui est exécuté de telle manière qu'en cas d'une demande de transmission d'un ou de plusieurs paquets de données (DAT1, DAT2) dans le sens de transmission descendant vers la station radio d'abonné (MS), un canal de transmission (TCH/F) de la cellule radio momentanée, dans laquelle se trouve la station radio d'abonné (MS), est directement affecté à la station radio d'abonné (MS) par l'intermédiaire d'un canal de signalisation (CCCH), sans émission préalable d'un message radio,
**caractérisé en ce**
**qu'**un accès aléatoire (RA) dans le sens de transmission montant est émis par la station radio d'abonné (MS), à travers le canal de transmission (TCH/F) affecté directement, pendant la réception des paquets de données (DAT1, DAT2) émis dans le sens de transmission descendant et qu'il y est répondu par le réseau de radiocommunication mobile (GPNW) par la transmission de valeurs de mesure (MEAS) par l'intermédiaire de l'interface radio, dans le sens de transmission descendant.

6. Dispositif selon la revendication 5,
**caractérisé en ce**
**qu'**un noeud de réseau de service (GSN) est prévu dans le réseau de radiocommunication mobile (GPNW), ce noeud de réseau de service étant exécuté de telle manière que la transmission des paquets de données (DAT1, DAT2) est initiée selon un service de données en paquets par l'intermédiaire du canal de transmission (TCH/F) affecté directement.
